# FASCICULE DE BREVET EUROPEEN

(11) **EP 3 529 987 B1**
(45) Date de publication et mention de la délivrance du brevet: **06.05.2026**
(21) Numéro de dépôt: 17794382.6
(22) Date de dépôt: 16.10.2017
(51) Int. Cl.: H04N 19/13, H04N 19/136, H04N 19/157, H04N 19/176, H04N 19/597

(54) **PROCÉDÉ DE CODAGE ET DE DÉCODAGE DE PARAMÈTRES D'IMAGE, DISPOSITIF DE CODAGE ET DE DÉCODAGE DE PARAMÈTRES D'IMAGE ET PROGRAMMES D'ORDINATEUR CORRESPONDANTS**
METHODE FÜR DIE KODIERUNG UND DEKODIERUNG VON BILDPARAMETERN, VORRICHTUNG FÜR DIE KODIERUNG UND DEKODIERUNG VON BILDPARAMETERN UND ZUGEHÖRIGE COMPUTERPROGRAMME
METHOD FOR CODING AND DECODING IMAGE PARAMETERS, DEVICE FOR CODING AND DECODING IMAGE PARAMETERS AND COMPUTER PROGRAMS CORRESPONDING THERETO

(30) Priorité: 21.10.2016 FR 1660251
(43) Date de publication de la demande: 28.08.2019
(73) Titulaire: Orange, 92130 Issy-les-Moulineaux (FR)
(72) Inventeur: PHILIPPE, Pierrick, 92326 Châtillon cedex (FR); REUZE, Kevin, 92326 Châtillon cedex (FR)
(86) Numéro de dépôt international: PCT/FR2017/052840
(87) Numéro de publication internationale: WO 2018/073523

(56) Documents cités:
- WO-A1-2014/162749
- WO-A1-2014/162749
- US-A1- 2012 243 606
- US-A1- 2012 328 012
- US-A1- 2012 328 012
- US-A1- 2014 210 652
- US-A1- 2014 210 652
- DONGUK KIM ET AL: "Intra prediction mode coding by using decoder-side matching", MULTIMEDIA SIGNAL PROCESSING, 2009. MMSP '09. IEEE INTERNATIONAL WORKSHOP ON, IEEE, PISCATAWAY, NJ, USA, 5 October 2009 (2009-10-05), pages 1 - 4, XP031551065, ISBN: 978-1-4244-4463-2

## Description

### Domaine de l'invention

La présente invention se rapporte de manière générale au domaine du traitement d'images, et plus précisément au codage et au décodage de paramètres d'images numériques, que ces images numériques soient fixes ou fassent partie d'une séquence d'images numériques.

Le codage/décodage de tels paramètres d'image s'applique notamment à des images issues d'au moins une séquence vidéo comprenant :
- des images issues d'une même caméra et se succédant temporellement (codage/décodage de type 2D),
- des images issues de différentes caméras orientées selon des vues différentes (codage/décodage de type 3D),
- des composantes de texture et de profondeur correspondantes (codage/décodage de type 3D),
- etc...

La présente invention s'applique de manière similaire au codage/décodage de paramètres d'images de type 2D ou 3D.

L'invention peut notamment, mais non exclusivement, s'appliquer au codage vidéo mis en œuvre dans les codeurs vidéo actuels AVC et HEVC et leurs extensions (MVC, 3D-AVC, MV-HEVC, 3D-HEVC, etc), et au décodage correspondant.

### Art antérieur

Les codeurs vidéo actuels (MPEG, H.264, HEVC, ...) utilisent une représentation par blocs de la séquence vidéo. Les images sont découpées en blocs, lesquels sont susceptibles d'être redécoupés de façon récursive.

Pour un bloc courant à coder, les paramètres d'image associés à ce bloc sont codés sous forme de bits à l'aide d'une méthode de codage adaptée mise en œuvre par un codeur, tel que par exemple un codeur entropique dont le but est de coder ces paramètres sans perte.

De tels paramètres sont par exemple :
- les coefficients résiduels de prédiction des pixels du bloc courant,
- le mode de prédiction (prédiction Intra, prédiction Inter, prédiction par défaut réalisant une prédiction pour laquelle aucune information n'est transmise au décodeur (« en anglais « skip »)),
- des informations précisant le type de prédiction (orientation, image de référence, ...),
- le type de découpage du bloc courant,
- les informations de mouvement si nécessaire,
- etc.

Les bits obtenus après codage entropique sont inscrits dans un flux de données qui est destiné à être transmis au décodeur.

Une fois que le flux a été reçu par le décodeur, le décodage est fait image par image, et pour chaque image, bloc par bloc. Pour chaque bloc, les bits représentatifs des paramètres d'image associés au bloc sont lus, puis décodés à l'aide d'une méthode de décodage mise en œuvre par un décodeur, dont la table de vérité est la même que celle du codeur.

Pour un paramètre d'image du type précité associé à un bloc courant, tel que par exemple le mode de prédiction intra, la norme HEVC (abréviation anglaise de « High Efficiency Video Coding ») propose de coder un tel mode de prédiction en prédisant la valeur de ce mode par rapport à :
- la valeur du mode de prédiction intra d'un bloc A situé au-dessus du bloc courant et qui a déjà été codé,
- la valeur du mode de prédiction intra d'un bloc B situé à gauche du bloc courant et qui a déjà été codé.

A cet effet, les valeurs des modes de prédiction intra du bloc A et du bloc B sont d'abord testées à l'aide d'un arbre de décision pour déterminer trois valeurs de modes de prédiction intra plus probables MPM (abréviation anglaise de « Most Probable Mode ») pour le bloc à coder, parmi les trente-cinq valeurs possibles du mode intra telles que proposées dans la norme HEVC.

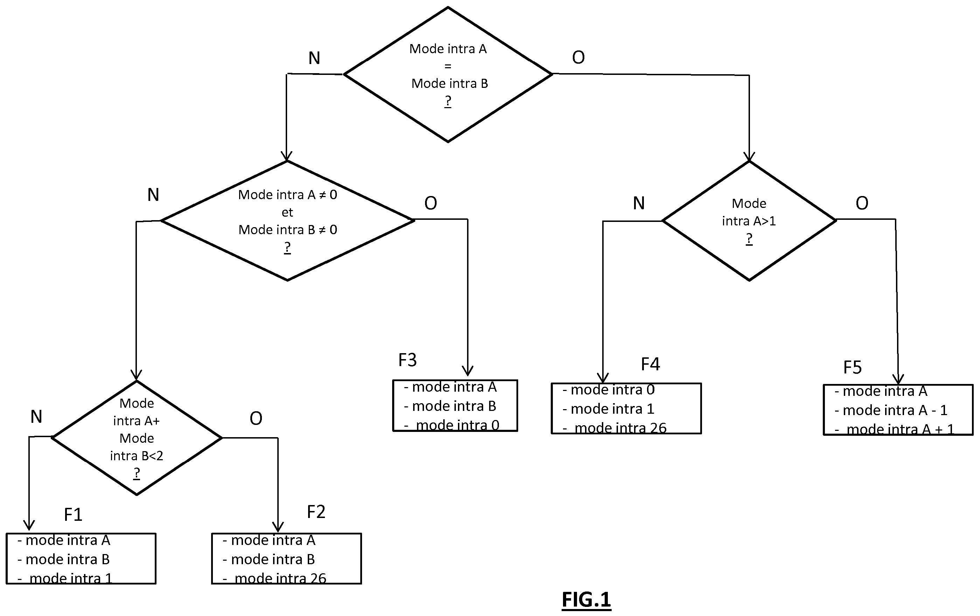

Un tel arbre de décision est représenté sur la figure 1. Suivant les valeurs du mode de prédiction intra du bloc A et du mode de prédiction intra du bloc B, l'arbre de décision permet de déterminer les trois modes de prédiction intra les plus probables, selon cinq manières différentes représentées respectivement par les cinq feuilles F1, F2, F3, F4, F5 les plus basses de l'arbre.

Ainsi :
- la feuille F1 associe au mode de prédiction intra du bloc courant les trois valeurs les plus probables suivantes:
   - MPM₀=mode de prédiction intra du bloc A,
   - MPM₁=mode de prédiction intra du bloc B,
   - MPM₃=mode de prédiction intra HEVC n°1
- la feuille F2 associe au mode de prédiction intra du bloc courant les trois valeurs les plus probables suivantes:
   - MPM₀=mode de prédiction intra du bloc A,
   - MPM₁=mode de prédiction intra du bloc B,
   - MPM₃=mode de prédiction intra HEVC n°26
- la feuille F3 associe au mode de prédiction intra du bloc courant les trois valeurs les plus probables suivantes:
   - MPM₀=mode de prédiction intra du bloc A,
   - MPM₁=mode de prédiction intra du bloc B,
   - MPM₃=mode de prédiction intra HEVC n°0 (Planar)
- la feuille F4 associe au mode de prédiction intra du bloc courant les trois valeurs les plus probables suivantes:
   - MPM₀=mode de prédiction intra HEVC n°0 (Planar),
   - MPM₁=mode de prédiction intra HEVC n°1,
   - MPM₃=mode de prédiction intra HEVC n°26
- la feuille F5 associe au mode de prédiction intra du bloc courant les trois valeurs les plus probables suivantes :
   - MPM₀= mode de prédiction intra du bloc A,
   - MPM₁= mode de prédiction intra du bloc A -1,
   - MPM₃= mode de prédiction intra du bloc A +1.

Pour chacune des cinq feuilles, le mode de prédiction sélectionné est codé, les valeurs respectives des trente-cinq modes de prédiction intra étant codées de la même façon suivante :
- la valeur du premier mode de prédiction intra le plus probable MPM₀ est codée sur deux bits,
- la valeur du deuxième mode de prédiction intra le plus probable MPM₁ est codée sur trois bits,
- la valeur du troisième mode de prédiction intra le plus probable MPM₂ est codée sur trois bits,
- la valeur de chacun des trente-deux modes de prédiction restants MPM₃ à MPM₃₄ est codée sur six bits.

Un exemple de schéma de signalisation est décrit dans la table ci-dessous:

| Mode de prediction intra le plus probable | Mot de code | Longueur (bits) |
|---|---|---|
| MPM₀ | 00 | 2 |
| MPM₁ | 010 | 3 |
| MPM₂ | 011 | 3 |
| MPM₃ | 100000 | 6 |
| MPM₄ | 100001 | 6 |
| MPM₅ | 100010 | 6 |
| ... | ... | ... |
| MPM₃₄ | 111111 | 6 |

Une telle méthode de codage du mode de prédiction intra qui code sur moins de bits les valeurs des premiers modes de prédiction intra les plus probables par rapport aux valeurs des modes de prédiction intra moins probables permet une réduction du coût de signalisation, le nombre moyen obtenu de bits à transmettre ayant été évalué à 4.01 bits. Afin de réduire encore le coût de signalisation, il est prévu, selon la norme HEVC, d'appliquer un codage CABAC (Abréviation anglaise de « Context Adaptive Binary Arithmetic Coding ») sur un ou plusieurs des bits constitutifs des mots de code associés. Le nombre moyen obtenu de bits à transmettre est ainsi ramené à 3.95 bits.

L'inconvénient d'une telle technique de codage des paramètres d'image est que la séquence binaire qui en résulte reste coûteuse à signaler. Ainsi, elle ne permet pas d'optimiser la réduction du gain en compression des données codées. Il en résulte des performances de compression qui ne sont pas satisfaisantes.

Les documents WO 2014/162749, US 2014/210652 et US 2012/328012 décrivent différents procédés de codage d'au moins un paramètre d'image courant, un tel paramètre d'image pouvant être associé à N valeurs possibles.

En particulier, le document WO 2014/162749 propose de sélectionner une table de N mots de code parmi au moins deux tables de N mots de code disponibles pour coder la valeur dudit au moins un paramètre d'image courant.

### Objet et résumé de l'invention

Un des buts de l'invention est donc de remédier à des insuffisances/inconvénients de l'état de la technique et/ou d'y apporter des améliorations.

A cet effet, un objet de la présente invention concerne un procédé de codage d'au moins un paramètre d'image courant, caractérisé en ce que, relativement à une zone d'une image courante, il met en œuvre ce qui suit :
- en fonction de la valeur d'au moins un paramètre d'une zone d'image qui précède la zone de l'image courante, sélection d'une méthode de codage du au moins un paramètre d'image courant, tel que spécifié dans la revendication 1.

Selon un mode de réalisation particulier, N valeurs possibles étant associées audit au moins un paramètre d'image courant, tel que N≥2 :
- Q mots de code ayant tous la même longueur sont associés respectivement à certaines Q valeurs possibles parmi N dudit au moins un paramètre d'image courant, tel que Q<N,
- N-Q ou K-Q mots de code, de longueur respective inférieure à celle des Q mots de code, sont associés respectivement aux N-Q ou K-Q valeurs restantes possibles dudit au moins un paramètre d'image courant.

Une telle disposition permet de réduire encore davantage le coût de signalisation des N mots de code associés respectivement aux N valeurs codées d'un paramètre d'image, en attribuant aux valeurs les plus probables du paramètre d'image des modes de code de longueur inférieure à celle des mots de code associés aux valeurs les moins probables du paramètre d'image.

Cette réduction s'accompagne en outre d'une estimation du débit plus facile à calculer compte tenu du fait que les valeurs les moins probables du paramètre d'image sont associées à des mots de code qui sont de même longueur.

Une telle disposition réduit donc la complexité du codeur en termes de ressources de calcul.

Les différents modes ou caractéristiques de réalisation précités peuvent être ajoutés indépendamment ou en combinaison les uns avec les autres, aux étapes du procédé de codage tel que défini ci-dessus.

L'invention concerne également un dispositif de codage d'au moins un paramètre d'image courant, tel que spécifié dans la revendication 3.

Un tel dispositif de codage est notamment apte à mettre en œuvre le procédé de codage précité.

L'invention concerne aussi un procédé de décodage d'au moins un paramètre d'image courant, tel que spécifié dans la revendication 6.

Selon un mode de réalisation particulier, N valeurs possibles étant associées audit au moins un paramètre d'image courant, tel que N≥2 :
- Q mots de code ayant tous la même longueur sont associés respectivement à certaines Q valeurs possibles parmi N dudit au moins un paramètre d'image courant, tel que Q<N,
- N-Q ou K-Q mots de code, de longueur respective inférieure à celle des Q mots de code, sont associés respectivement aux N-Q ou K-Q valeurs restantes possibles dudit au moins un paramètre d'image courant.

Les différents modes ou caractéristiques de réalisation précités peuvent être ajoutés indépendamment ou en combinaison les uns avec les autres, aux étapes du procédé de décodage tel que défini ci-dessus.

L'invention concerne également un dispositif de décodage d'au moins un paramètre d'image courant, tel que spécifié dans la revendication 8.

Un tel dispositif de décodage est notamment apte à mettre en œuvre le procédé de décodage précité.

L'invention concerne encore un programme d'ordinateur comportant des instructions pour mettre en œuvre l'un des procédés de codage et de décodage selon l'invention, lorsqu'il est exécuté sur un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en œuvre de l'un des procédés de codage ou de décodage selon l'invention, tels que décrits ci-dessus.

L'invention vise également un support d'enregistrement lisible par un ordinateur sur lequel est enregistré un programme d'ordinateur, ce programme comportant des instructions adaptées à la mise en œuvre du procédé de codage ou de décodage selon l'invention, tels que décrits ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, une clé USB ou encore un moyen d'enregistrement magnétique, par exemple un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de codage ou de décodage précité.

### Brève description des dessins

D'autres caractéristiques et avantages apparaîtront à la lecture de plusieurs modes de réalisation préférés décrits en référence aux figures dans lesquelles:
- la figure 1 représente un exemple de détermination selon l'état de l'art de valeurs les plus probables d'un paramètre d'image d'une zone d'image courante, prenant en compte le voisinage spatial de la zone d'image courante,
- la figure 2A représente les principales étapes du procédé de codage d'un paramètre d'image selon un premier mode de réalisation de l'invention,
- la figure 2B représente les principales étapes du procédé de codage d'un paramètre d'image selon un deuxième mode de réalisation de l'invention,
- la figure 2C représente un exemple de méthode de codage appliquée à plusieurs valeurs d'un paramètre d'image,
- la figure 3 représente un mode de réalisation d'un codeur mettant en œuvre un procédé de codage de paramètre d'image selon la figure 2A, 2B ou 2C,
- la figure 4A représente un premier exemple de zone d'image précédant une zone d'image courante,
- la figure 4B représente un deuxième exemple de zone d'image précédant une zone d'image courante,
- la figure 5 représente un exemple de test de valeurs de paramètre d'image courant mis en œuvre selon l'invention,
- la figure 6 représente les principales étapes du procédé de décodage d'un paramètre d'image selon un mode de réalisation de l'invention,
- la figure 7 représente un mode de réalisation d'un décodeur mettant en œuvre un procédé de décodage de paramètre d'image selon la figure 6.

### Description détaillée de la partie codage

Un mode de réalisation de l'invention va maintenant être décrit, dans lequel le procédé de codage selon l'invention est utilisé pour coder un paramètre d'image selon un flux binaire proche de celui qu'on obtient par un codage conforme à l'une quelconque des normes de codage vidéo actuelles ou à venir.

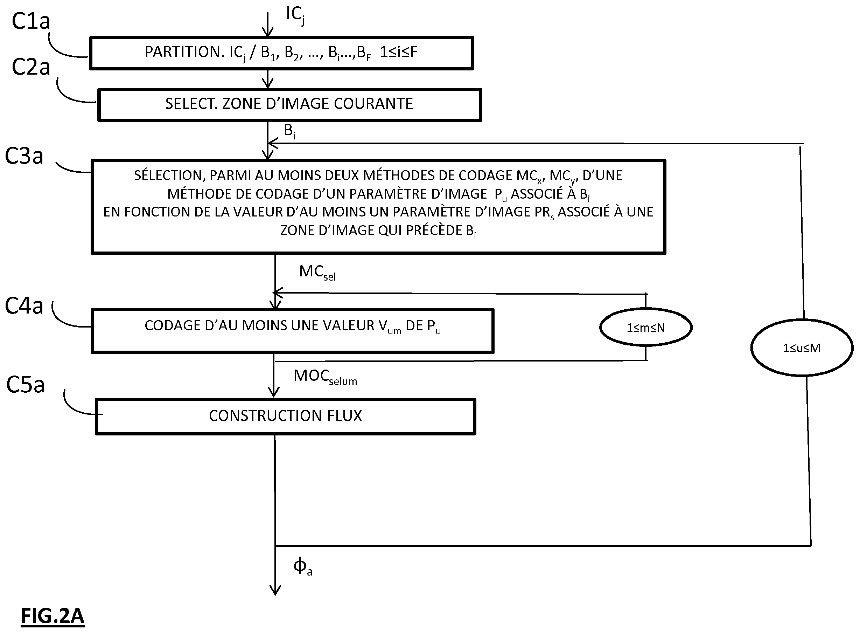

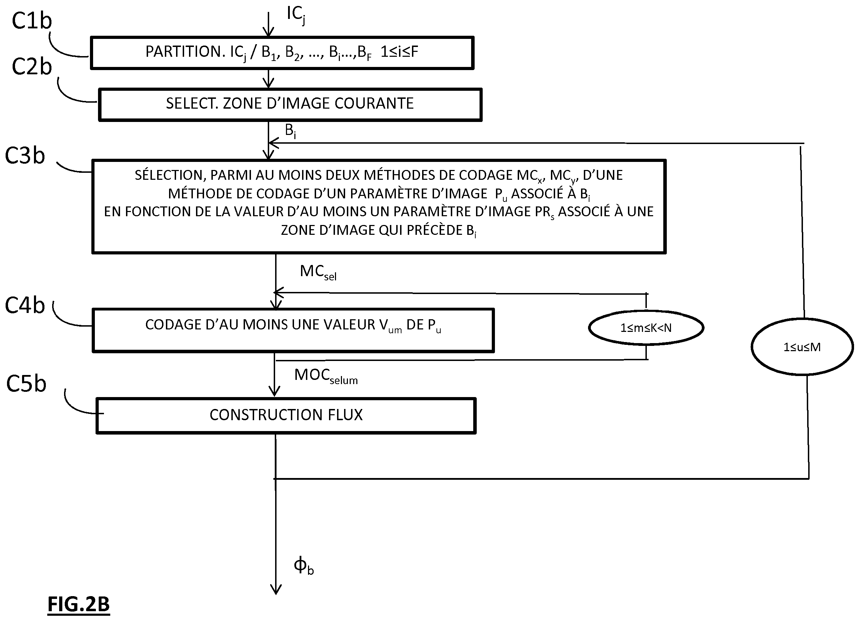

Dans ce mode de réalisation, le procédé de codage selon l'invention est par exemple implémenté de manière logicielle ou matérielle par modifications d'un codeur initialement conforme à l'une desdites normes. Le procédé de codage selon l'invention est représenté sous la forme d'un algorithme comportant des étapes C1a à C5a telles que représentées à la figure 2A ou bien des étapes C1b à C5b telles que représentées à la figure 2B.

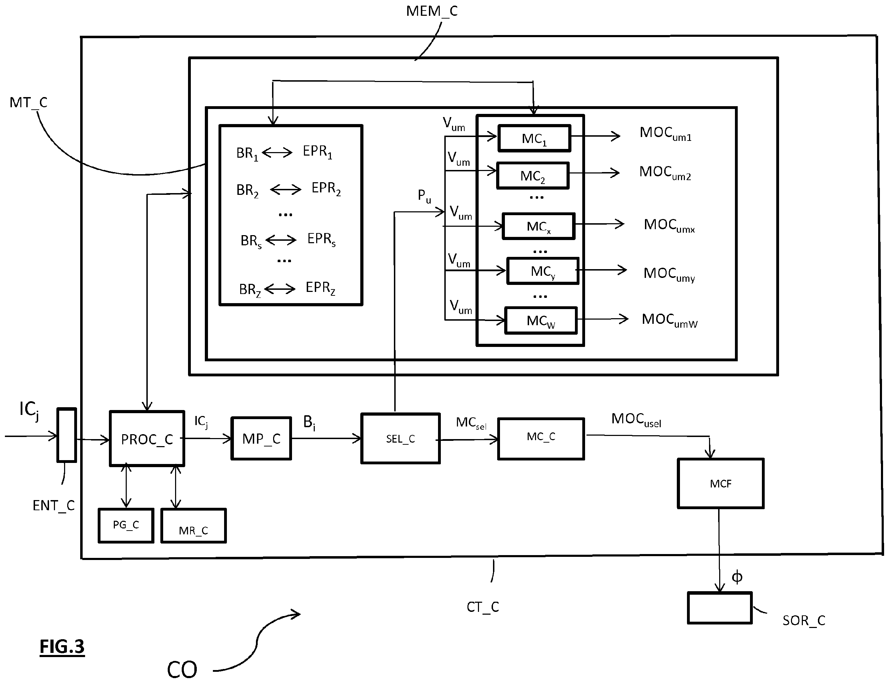

Selon le mode de réalisation de l'invention, le procédé de codage selon l'invention est implémenté dans un dispositif de codage CO représenté à la figure 3.

Comme illustré en figure 3, un tel dispositif codeur comprend :
- une entrée ENT_C pour recevoir une image courante à coder,
- un circuit de traitement CT_C pour mettre en œuvre le procédé de codage selon l'invention, le circuit de traitement CT_C contenant :
   - une mémoire MEM_C comprenant une mémoire tampon MT_C,
   - un processeur PROC_C piloté par un programme d'ordinateur PG_C,
- une sortie SOR_C pour délivrer un signal ou flux codé contenant les données obtenues à l'issue du codage du paramètre d'image courant.

A l'initialisation, les instructions de code du programme d'ordinateur PG_C sont par exemple chargées dans une mémoire RAM, MR_C, avant d'être exécutées par le circuit de traitement CT_C.

Le procédé de codage représenté sur la figure 2A ou 2B s'applique à tout paramètre associé à une image courante ICⱼ à coder qui peut être une image fixe ou bien faisant partie d'une séquence d'images IC₁, IC₂, ..., ICⱼ,..., IC_{G}, (1≤j≤G), certaines de ces images étant codées en relation avec d'autres.

Au cours d'une étape C1a représentée à la figure 2A, il est procédé, de façon connue en soi, au partitionnement d'une image courante ICⱼ en une pluralité de zones d'image B₁, B₂, ..., Bᵢ,..., B_{F} (1≤i≤F). Une telle étape de partitionnement est mise en œuvre par un dispositif de partitionnement MP_C représenté sur la figure 3, lequel dispositif est piloté par le processeur PROC_C.

Selon un exemple de réalisation, lesdites zones sont des blocs.

Il convient de noter qu'au sens de l'invention, le terme « bloc » signifie unité de codage (de l'anglais « coding unit »). Cette dernière terminologie est notamment utilisée dans la norme HEVC « ISO/IEC/23008-2 Recommandation ITU-T H.265 High Efficiency Video Coding (HEVC) ».

En particulier, une telle unité de codage regroupe des ensembles de pixels de forme rectangulaire ou carrée, encore appelés blocs ou macroblocs.

Une telle unité de codage pourrait, dans une norme future, regrouper également des ensembles de pixels présentant d'autres formes géométriques.

Selon un autre exemple de réalisation, les zones de l'image sont adaptées aux caractéristiques locales de l'image, telles que par exemple une texture homogène, un mouvement constant, un objet en avant plan dans l'image, etc...

Lesdites zones B₁, B₂, ..., Bᵢ,..., B_{F} sont destinées à être codées selon un ordre de parcours prédéterminé, qui est par exemple du type lexicographique. Cela signifie que les zones sont codées les unes après les autres, de la gauche vers la droite, puis du haut vers le bas.

D'autres types de parcours sont bien sûr possibles. Ainsi, il est possible de découper l'image ICⱼ en plusieurs sous-images appelées slices et d'appliquer indépendamment un découpage de ce type sur chaque sous-image. Il est également possible de coder non pas une succession de lignes, comme expliqué ci-dessus, mais une succession de colonnes. Il est également possible de parcourir les lignes ou colonnes dans un sens ou dans l'autre.

Chaque zone d'image peut par ailleurs être elle-même subdivisée en sous zones qui peuvent elles-mêmes être subdivisées.

Au cours d'une étape C2a représentée à la figure 2A, le codeur CO sélectionne comme zone d'image courante, une première zone à coder Bᵢ de l'image ICⱼ, telle que par exemple la première zone B₁.

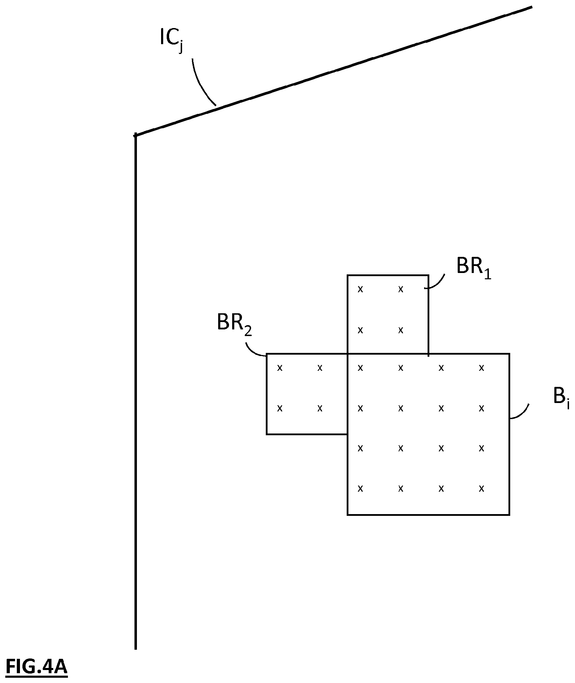

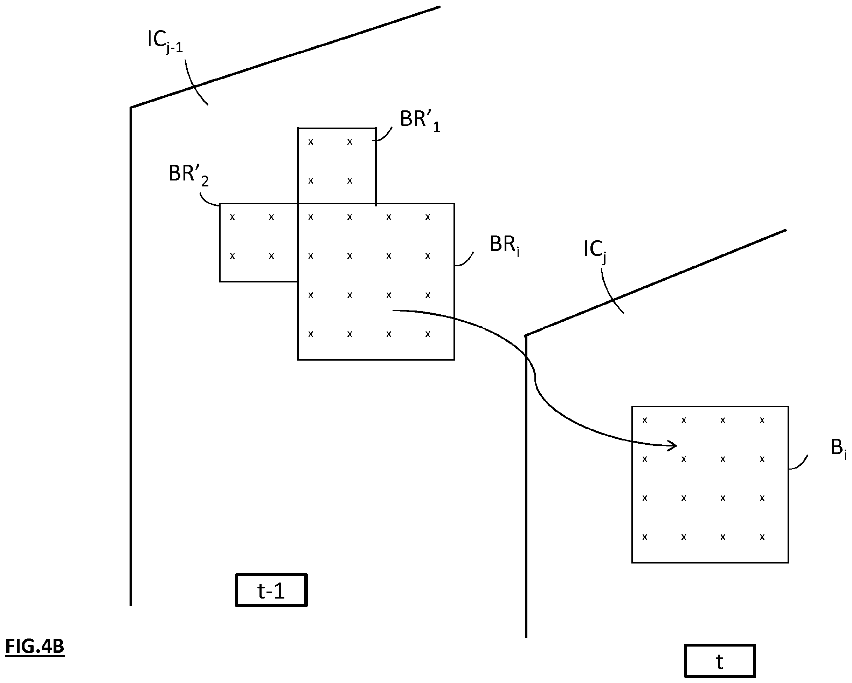

Dans l'exemple représenté sur la figure 4A ou 4B, la zone d'image courante Bᵢ est un bloc de taille 8x8 pixels.

De façon classique, la zone d'image courante Bᵢ est associée à une pluralité de paramètres d'image P₁, P₂,..., Pᵤ,..., P_{M}, tel que 1≤u≤M.

De tels paramètres sont par exemple :
- les coefficients résiduels de prédiction des pixels de la zone d'image courante si cette dernière est prédite conformément à un mode de prédiction donné,
- les valeurs de pixels constituant la zone d'image courante considérées tel qu'elles ou au travers d'une opération de calcul de caractéristique telle que par exemple la moyenne ou l'énergie de ces pixels ou bien encore l'énergie de ces pixels après filtrage,
- le mode de prédiction (prédiction Intra, prédiction Inter, prédiction par défaut réalisant une prédiction pour laquelle aucune information n'est transmise au décodeur (« en anglais « skip »)),
- des informations précisant le type de prédiction (orientation, image de référence, ...),
- le type de découpage de la zone d'image courante,
- les informations de mouvement si nécessaire,
- le type de transformée appliquée aux données de la zone d'image courante, tel que les transformées en cosinus discrète DCT (abréviation anglaise de « Discrete Cosine Transform »), ou bien les transformées en sinus discrète DST (abréviation anglaise de « Discrete Sine Transform »),
- le pas de quantification,
- etc.

Un paramètre Pᵤ considéré prend une pluralité de valeurs Vᵤ₁, Vᵤ₂,..., Vᵤₘ,..., V_{uN} (1≤m≤N). Il s'agit par exemple :
- du mode de prédiction intra de la norme HEVC qui est associé à trente-cinq directions de prédiction différentes,
- du pas de quantification qui est associé à cinquante-deux valeurs possibles,
- de la taille du bloc et son partitionnement,
- du type de transformation appliquée sur les coefficients résiduels de prédiction des pixels de la zone d'image courante si cette dernière est prédite conformément à un mode de prédiction donné, par exemple une DCT ou DST d'un type donné ou une transformée définie par ses coefficients,
- etc...

Conformément à l'invention, au cours d'une étape C3a représentée à la figure 2A, pour un paramètre d'image courant Pᵤ associé à la zone d'image courante Bᵢ, il est procédé à une sélection d'une méthode de codage du paramètre Pᵤ, parmi au moins deux méthodes de codage prédéterminées MCₓ et MC_{y}.

L'étape C3a est mise en œuvre par un dispositif de sélection SEL_C représenté sur la figure 3, lequel dispositif est piloté par le processeur PROC_C.

Selon un exemple de réalisation, seulement deux méthodes de codage MCₓ et MC_{y} sont mises à disposition au codeur CO.

De façon plus générale, et comme représenté sur la figure 3, les méthodes de codage MCₓ et MC_{y} appartiennent à un ensemble de W méthodes de codage MC₁, MC₂,..., MCₓ,..., MC_{y},..., MC_{W} (1≤x≤y≤W) qui est stocké dans la mémoire tampon MT_C du codeur CO. Pour une valeur Vᵤₘ donnée d'un paramètre d'image Pᵤ de la zone d'image courante Bᵢ, les W méthodes de codage sont adaptées pour associer à la valeur Vᵤₘ un code composé de W mots de code MOCᵤₘ₁, MOCᵤₘ₂,..., MOCᵤₘₓ, ..., MOC_{umy},..., MOC_{umW} correspondant respectivement aux W méthodes de codage mises à disposition au codeur CO.

Conformément à l'invention, la sélection d'une méthode de codage parmi au moins deux méthodes de codage est fonction de la valeur d'au moins un paramètre d'image associé à une zone d'image de référence qui précède la zone d'image courante Bᵢ.

Selon un mode de réalisation, la zone d'image de référence est composée d'une pluralité de zones de référence BR₁, BR₂,..., BRₛ,..., BR_{Z} (1≤s≤Z) qui ont été codées avant la zone d'image courante Bᵢ. En référence à la figure 3, de telles zones de référence BR₁, BR₂,..., BRₛ,..., BR_{Z} sont stockées dans la mémoire tampon MT_C du codeur CO respectivement en association avec leurs ensembles de paramètres d'image correspondants EPR₁, EPR₂,..., EPRₛ,..., EPR_{Z}.

Par exemple, l'ensemble EPRₛ de paramètres d'image associé à la zone de référence BRₛ contient une pluralité de paramètres d'image PR₁, PR₂,..., PRₖ,..., Pᵥ (1≤k≤V) du type mentionné plus haut en relation avec la zone d'image courante Bᵢ.

Dans l'exemple de la figure 4A, la zone d'image de référence contient deux zones de référence BR₁ et BR₂ qui précédent spatialement la zone d'image courante Bᵢ dans l'image courante ICⱼ. La zone de référence BR₁ est située par exemple au-dessus de la zone d'image courante Bᵢ. La zone de référence BR₂ est située par exemple à gauche de la zone d'image courante Bᵢ.

Le paramètre de la zone de référence est par exemple du même type que le paramètre Pᵤ de la zone d'image courante Bᵢ. C'est-à-dire que par exemple, si le paramètre d'image de la zone d'image courante Bᵢ est le mode de prédiction intra, c'est le mode de prédiction intra de la zone d'image de référence qui est considéré.

Selon un autre exemple, le paramètre de la zone de référence est d'un type différent du type du paramètre Pᵤ de la zone d'image courante Bᵢ. C'est-à-dire que par exemple, si le paramètre d'image de la zone d'image courante Bᵢ est le mode de prédiction inter, c'est par exemple l'indice de la transformée qui a été appliquée aux données de la zone d'image de référence qui est considéré.

En outre, la sélection de la méthode de codage peut être mise en œuvre en fonction de plusieurs paramètres associés à une zone d'image de référence. Ainsi par exemple, si le paramètre d'image de la zone d'image courante Bᵢ est la transformée, par exemple du type DCT ou DST, qui a été appliquée aux pixels de la zone d'image courante, la sélection de la méthode de codage à appliquer à l'indice de cette transformée peut être fonction non seulement de l'indice de la transformée appliquée aux pixels de la zone d'image de référence, mais également du mode de prédiction associé à cette dernière.

Dans l'exemple de la figure 4B où l'image courante ICⱼ fait partie d'une séquence d'images, la zone d'image de référence contient deux zones de référence BR'₁ et BR'₂ qui précédent temporellement la zone d'image courante Bᵢ. A cet effet, les zones de référence BR'₁ et BR'₂ sont situées dans une autre image que l'image courante ICⱼ, telle que par exemple l'image ICⱼ₋₁ qui a été codée à un instant t-1 qui précède immédiatement l'instant courant t. La zone de référence BR'₁ est située par exemple au-dessus de la zone d'image de référence BRᵢ correspondant, dans l'image ICⱼ₋₁, à la zone d'image courante Bᵢ. La zone de référence BR'₂ est située par exemple à gauche de la zone d'image de référence BRᵢ.

En référence à nouveau à la figure 2A, il est procédé, au cours d'une étape C4a, au codage de la valeur Vᵤₘ du paramètre d'image Pᵤ à l'aide de la méthode de codage sélectionnée.

L'étape C4a est mise en œuvre par un dispositif de codage MC_C représenté sur la figure 3, lequel dispositif est piloté par le processeur PROC_C.

A cet effet, la valeur Vᵤₘ est associée au mot de code MOCₛₑₗᵤₘ correspondant à la méthode de codage sélectionnée MCₛₑₗ. S'il s'agit par exemple de la méthode de codage MCₓ, la valeur Vᵤₘ du paramètre d'image courant Pᵤ est associée au mot de code MOCₓᵤₘ correspondant à la méthode de codage MCₓ et stocké dans la mémoire tampon MT_C du codeur CO de la figure 3. Le mot de code MOCₓᵤₘ contient des informations numériques, tels que des bits par exemple.

Dans le cas où le paramètre d'image courant Pᵤ prend une pluralité de valeurs Vᵤ₁, Vᵤ₂,..., Vᵤₘ,..., V_{uN}, l'étape de codage C4a est itérée pour chacune de ces valeurs.

A l'issue de l'étape C4a, N mots de codes MOCₛₑₗᵤ₁, MOCₛₑₗᵤ₂,..., MOCₛₑₗᵤₘ, ..., MOC_{seluN} correspondant à la méthode de codage sélectionnée MCₛₑₗ sont donc obtenus.

Au cours d'une étape C5a représentée à la figure 2A, il est procédé à la construction d'un signal ou flux de données Φₐ qui contient l'un des N mots de code MOCₛₑₗᵤ₁, MOCₛₑₗᵤ₂,..., MOCₛₑₗᵤₘ, ..., MOC_{seluN} obtenus à l'issue de l'étape C4a précitée. il s'agit par exemple du mot de code MOCₛₑₗᵤₘ.

L'étape C5a est mise en œuvre par un dispositif MCF de construction de signal de données, tel que représenté sur la figure 3, lequel dispositif est piloté par le processeur PROC_C.

Le signal de données Φₐ est ensuite délivré via la sortie SOR_C du codeur CO de la figure 3. Un tel signal est soit stocké dans la mémoire tampon MT_C du codeur CO de la figure 3, soit transmis par un réseau de communication (non représenté) à un terminal distant. Celui-ci comporte un décodeur qui sera décrit plus loin dans la description.

Les étapes de codage C3a à C5a qui viennent d'être décrites ci-dessus sont ensuite mises en œuvre pour chacun des paramètres d'image P₁, P₂,..., Pᵤ,..., P_{M} à coder de la zone d'image courante Bᵢ.

L'ensemble des étapes C1a à C5a est ensuite mis en œuvre pour chacune des zones d'image B₁, B₂, ..., Bᵢ,..., B_{F} à coder de l'image courante ICⱼ considérée, dans un ordre prédéterminé qui est par exemple l'ordre lexicographique.

Le fait de disposer d'au moins deux méthodes de codage pour coder un paramètre d'image courant associé à une zone d'image courante Bᵢ et d'en sélectionner une sur la base d'un ou de plusieurs paramètres d'une zone d'image de référence, qui précède spatialement ou temporellement la zone d'image courante Bᵢ, permet d'obtenir un code dont le nombre d'informations est réduit substantiellement par rapport à celui contenu dans un code tel qu'obtenu par les techniques de codage implémentées dans les codeurs vidéo actuels. Il en découle que la complexité en ressources de calcul du codeur CO de la figure 3 est réduite et que le signal Φₐ délivré en sortie du codeur CO est moins coûteux en débit.

Selon un exemple de réalisation, la réduction en débit peut être augmentée en mettant en œuvre dans le dispositif de codage de paramètre d'image MC_C de la figure 3 un codage CABAC sur le mot de code MOCₛₑₗᵤₘ ou bien sur au moins un ou plusieurs des mots de code MOCₛₑₗᵤ₁, MOCₛₑₗᵤ₂,..., MOCₛₑₗᵤₘ, ..., MOC_{seluN} si le paramètre d'image courant Pᵤ prend N valeurs.

En référence à la figure 2B, un autre mode de réalisation du procédé de codage de l'invention est décrit. Selon cet autre mode de réalisation, le paramètre d'image courant Pᵤ prend N valeurs Vᵤ₁, Vᵤ₂,..., Vᵤₘ,..., V_{uN} (1≤m≤N).

Les étapes C1b à C3b sont les mêmes que les étapes C1a à C3a de la figure 2A et ne seront pas décrites à nouveau en détail.

Le procédé de codage de la figure 2B comprend en outre une étape C4b, au cours de laquelle le dispositif de codage MC_C de la figure 3 applique un codage de seulement K valeurs Vᵤ₁, Vᵤ₂,..., Vᵤₘ,..., V_{uK} parmi N valeurs du paramètre d'image courant Pᵤ, tel que 1≤K<N, à l'aide de la méthode de codage sélectionnée en C3b.

A l'issue de l'étape C4b, K mots de codes MOCₛₑₗᵤ₁, MOCₛₑₗᵤ₂,..., MOCₛₑₗᵤₘ, ..., MOC_{seluK} correspondant à la méthode de codage sélectionnée MCₛₑₗ sont donc obtenus.

Au cours d'une étape C5b représentée à la figure 2B, le dispositif MCF de la figure 3 procède à la construction d'un signal de données Φ_{b} qui contient un des K mots de code MOCₛₑₗᵤ₁, MOCₛₑₗᵤ₂,..., MOCₛₑₗᵤₘ, ..., MOC_{seluK} obtenus à l'issue de l'étape C4b précitée. L'un desdits K mots de codes signalé est par exemple le mot de code MOCₛₑₗᵤₘ.

Un tel mode de réalisation permet d'optimiser la réduction du coût de signalisation.

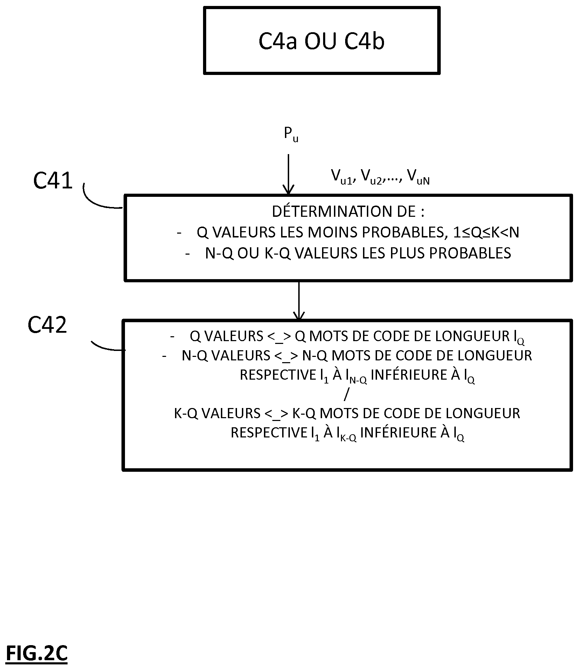

Selon un autre mode de réalisation dans lequel le paramètre d'image courant Pᵤ prend N valeurs Vᵤ,, Vᵤ₂,..., Vᵤₘ,..., V_{uN} (1≤m≤N), l'étape C4a ou C4b comprend, en référence à la figure 2C, une sous-étape C41 au cours de laquelle le dispositif de codage MC_C détermine :
- un nombre Q de valeurs les moins probables, tel que 1≤Q<N ou bien 1 ≤Q<K, et
- un nombre N-Q ou bien K-Q de valeurs les plus probables du paramètre d'image courant Pᵤ.

Au cours d'une sous-étape C42, le dispositif de codage MC_C de la figure 3 associe alors :
- aux Q valeurs, respectivement Q mots de code d'une même longueur I_{Q} prédéterminée,
- aux autres N-Q valeurs (fig.2A) ou K-Q valeurs (fig.2B), respectivement N-Q mots de code ou N-K mots de code, de longueur respective I₁, I₂,..., I_{N-Q} ou I₁, I₂,..., I_{K-Q} inférieure à la longueur I_{Q} des Q mots de code.

Si par exemple, un mot de code est constitué d'une pluralité de bits, la longueur de ce mot de code est constituée du nombre de bits contenus dans le mot de code considéré.

Le mode réalisation de la figure 2C permet ainsi d'optimiser la réduction du coût de signalisation du signal Φₐ ou Φ_{b}, laquelle réduction est couplée à une estimation du débit plus facile à calculer compte tenu du fait que les N-Q ou K-Q valeurs les moins probables du paramètre d'image courant Pᵤ sont associées à des mots de code qui sont de même longueur.

On va maintenant décrire un exemple de réalisation de l'invention, dans lequel le paramètre d'image courant Pᵤ est le mode intra HEVC. Le paramètre Pᵤ prend donc trente-cinq valeurs Vᵤ₁ à Vᵤ₃₅ qui correspondent respectivement aux trente-cinq indices de directions de prédiction proposées dans HEVC.

Dans l'exemple représenté, la zone d'image courante Bᵢ est un bloc de taille 8x8 comme représenté à la figure 4A. La zone d'image de référence considérée comprend les deux blocs BR₁ et BR₂ illustrés sur la figure 4A qui sont par exemple chacun de taille 4x4.

Conformément à l'invention, il est proposé de sélectionner une méthode de codage parmi deux méthodes de codage MC₁ et MC₂ proposées au codeur CO de la figure 3, en fonction des résultats de l'application d'un test sur les valeurs du mode de prédiction intra A du bloc BR₁ et du mode de prédiction intra B du bloc BR₂.

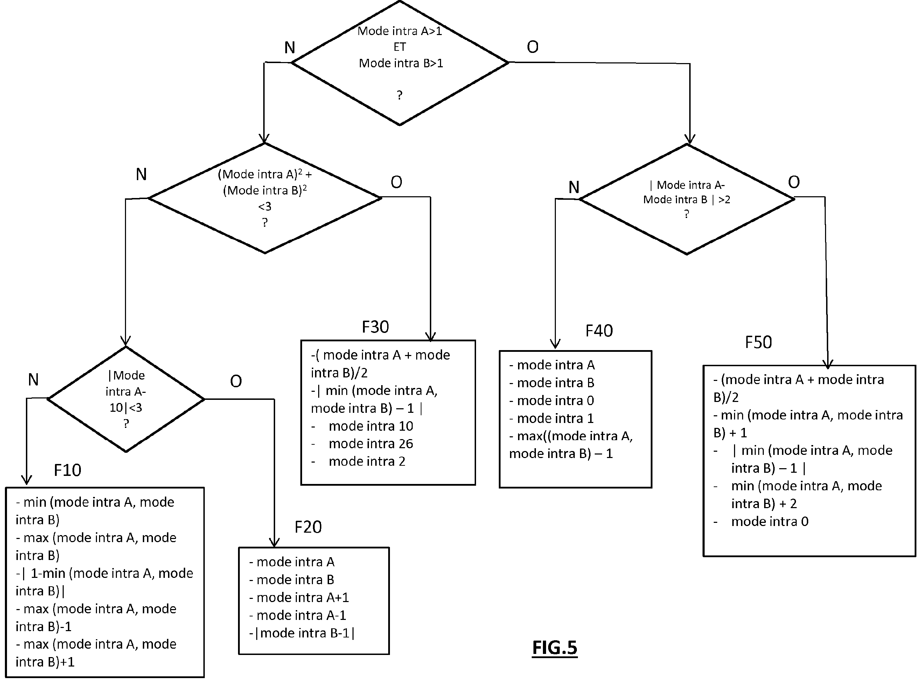

Un tel test est mis par exemple en œuvre à l'aide d'un arbre de décision représenté sur la figure 5. Cet arbre distingue cinq cas possibles. En d'autres termes, il partitionne les cas possibles. Des approches autres que basées sur des arbres sont possibles, par exemple par les techniques de classification (en anglais « clustering ») usuelles (découpe en hyperplan, régions paramétriques etc...). Suivant les valeurs du mode de prédiction intra A du bloc BR₁ et du mode de prédiction intra B du bloc BR₂, l'arbre de décision permet de déterminer cinq valeurs MPM₀ à MPM₄ de modes de prédiction intra plus probables pour le bloc courant Bᵢ, parmi les trente-cinq valeurs possibles du mode intra telles que proposées dans la norme HEVC, selon cinq manières différentes représentées respectivement par les cinq feuilles F10, F20, F30, F40, F50 les plus basses de l'arbre. Le nombre de valeurs de modes de prédiction intra plus probables est ici plus élevé que le nombre, fixé à trois, de modes de prédiction intra plus probables retenu classiquement dans HEVC.

Ainsi :
- la feuille F10 associe au mode de prédiction intra du bloc courant les cinq valeurs les plus probables suivantes:
   - MPM₀=min (mode intra A, mode intra B)
   - MPM₁=max (mode intra A, mode intra B)
   - MPM₂=|1-min (mode intra A, mode intra B)|
   - MPM₃= max (mode intra A, mode intra B)-1
   - MPM₄= max (mode intra A, mode intra B) +1
- la feuille F20 associe au mode de prédiction intra du bloc courant les cinq valeurs les plus probables suivantes:
   - MPM₀= mode intra A
   - MPM₁= mode intra B
   - MPM₂= mode intra A+1
   - MPM₃=mode intra A-1
   - MPM₄=|mode intra B-1|
- la feuille F30 associe au mode de prédiction intra du bloc courant les cinq valeurs les plus probables suivantes:
   - MPM₀= (mode intra A + mode intra B)/2
   - MPM₁=|min (mode intra A, mode intra B) - 1 |
   - MPM₂=mode intra 10
   - MPM₃=mode intra 26
   - MPM₄=mode intra 2
- la feuille F40 associe au mode de prédiction intra du bloc courant les cinq valeurs les plus probables suivantes:
   - MPM₀= mode intra A
   - MPM₁= mode intra B
   - MPM₂= mode intra 0
   - MPM₃= mode intra 1
   - MPM₄= max (mode intra A, mode intra B) - 1
- la feuille F50 associe au mode de prédiction intra du bloc courant les cinq valeurs les plus probables suivantes :
   - MPM₀= (mode intra A + mode intra B)/2
   - MPM₁= min (mode intra A, mode intra B) + 1
   - MPM₂=|min (mode intra A, mode intra B) - 1 |
   - MPM₃=min (mode intra A, mode intra B) + 2
   - MPM₄=mode intra 0.

Selon l'invention :
- pour les feuilles F10, F20 et F40, les valeurs respectives des trente-cinq modes de prédiction intra sont codées de la façon suivante conformément à la première méthode MC₁:
   - la valeur du premier mode de prédiction intra le plus probable MPM₀ est associée à un mot de code de deux bits,
   - la valeur du deuxième mode de prédiction intra le plus probable MPM₁ est associée à un mot de code de trois bits,
   - la valeur du troisième mode de prédiction intra le plus probable MPM₂ est associée à un mot de code de quatre bits,
   - la valeur du quatrième mode de prédiction intra le plus probable MPM₃ est associée à un mot de code de quatre bits,
   - la valeur du cinquième mode de prédiction intra le plus probable MPM₄ est associée à un mot de code de cinq bits,
   - la valeur de chacun des trente modes de prédiction restants MPM₅ à MPM₃₄ est associée à un mot de code de six bits,
- pour les feuilles F30 et F50, les valeurs respectives des trente-cinq modes de prédiction intra sont codées de la façon suivante conformément à la deuxième méthode MC₂:
   - la valeur du premier mode de prédiction intra le plus probable MPM₀ est associée à un mot de code de un bit,
   - la valeur du deuxième mode de prédiction intra le plus probable MPM₁ est associée à un mot de code de trois bits,
   - la valeur du troisième mode de prédiction intra le plus probable MPM₂ est associée à un mot de code de quatre bits,
   - la valeur du quatrième mode de prédiction intra le plus probable MPM₃ est associée à un mot de code de quatre bits,
   - la valeur du cinquième mode de prédiction intra le plus probable MPM₄ est associée à un mot de code de six bits,
   - la valeur de chacun des trente modes de prédiction restants MPM₅ à MPM₃₄ est associée à un mot de code de sept bits.

Dans cet exemple, un codage CABAC n'est pas appliqué sur un ou plusieurs des mots de code obtenus. Il a par ailleurs été calculé que le nombre moyen obtenu de bits à transmettre est égal à 3.72 bits, ce qui permet de gagner 0.29 bits pour chaque mode de prédiction intra signalé par rapport au nombre moyen de bits obtenu avec HEVC qui est de 4.01 bits.

Si un codage CABAC est appliqué sur le premier bit de chacun des mots de codes obtenus conformément à l'une des méthodes de codage MC₁ et MC₂, il a été calculé que le nombre moyen obtenu de bits à transmettre est égal à 3.68 bits, ce qui permet de gagner 0.27 bits pour chaque mode de prédiction intra signalé par rapport au nombre moyen de bits obtenu avec un codage CABAC implémenté dans HEVC, qui est de 3.95 bits.

Dans un autre mode de réalisation, la disponibilité des blocs avoisinant le bloc courant est évaluée. Ainsi, selon cet autre mode, un autre paramètre que le mode de prédiction aide à la détermination des modes de prédiction les plus probables. Dans ce mode, selon une première variante, si les blocs de référence BR₁ et BR₂ sont disponibles, alors l'arbre de décision conforme à la figure 5 sera mis en œuvre. Si un seul des blocs de référence BR₁ et BR₂ est disponible, selon une première méthode de codage prédéterminée MC₁, sont associées au mode de prédiction intra du bloc courant les trois valeurs les plus probables suivantes :
- MPM₀= mode intra A (si BR₁ disponible) / mode intra B (si BR₂ disponible)
- MPM₁= mode intra 0
- MPM₂=mode intra 1.

Les valeurs respectives des trente-cinq modes de prédiction intra sont codées de la façon suivante conformément à la première méthode MC₁:
- la valeur du premier mode de prédiction intra le plus probable MPM₀ est associée à un mot de code de deux bits,
- la valeur du deuxième mode de prédiction intra le plus probable MPM, est associée à un mot de code de trois bits,
- la valeur du troisième mode de prédiction intra le plus probable MPM₂ est associée à un mot de code de trois bits,
- la valeur de chacun des trente-deux modes de prédiction restants MPM₃ à MPM₃₄ est associée à un mot de code de six bits.

Selon une deuxième variante de ce mode, si les blocs de référence BR₁ et BR₂ sont tous les deux indisponibles, selon une deuxième méthode de codage prédéterminée MC₂, sont associées au mode de prédiction intra du bloc courant les trois valeurs les plus probables suivantes :
- MPM₀= mode intra 0
- MPM₁= mode intra 1
- MPM₂=mode intra 26.

Les valeurs respectives des trente-cinq modes de prédiction intra sont codées selon le même nombre de bits que la première méthode MC₁ ci-dessus.

Selon une variante du mode de réalisation qui vient d'être décrit, lorsque les blocs de référence BR₁ et BR₂ sont tous les deux disponibles et qu'en outre le mode de prédiction A du bloc BR₁ et le mode de prédiction B du bloc BR₂ sont tous deux égaux à 1, alors un mode de signalisation avantageux est employé. Dans ce cas, selon une troisième méthode de codage prédéterminée MC₃, sont associées au mode de prédiction intra du bloc courant les quatre valeurs les plus probables suivantes :
- MPM₀= mode intra 1
- MPM₁= mode intra 0
- MPM₂= mode intra 10
- MPM₄= mode intra 26.

Les valeurs respectives de ces quatre modes de prédiction intra sont codées de la façon suivante conformément à la troisième méthode de codage MC₃:
- la valeur du premier mode de prédiction intra le plus probable MPM₀ est associée à un mot de code de un bit, soit 0,
- la valeur du deuxième mode de prédiction intra le plus probable MPM₁ est associée à un mot de code de deux bits, soit 10,
- la valeur du troisième mode de prédiction intra le plus probable MPM₂ est associée à un mot de code de trois bits, soit 110,
- la valeur du quatrième mode de prédiction intra le plus probable MPM₃ est associée à un mot de code de trois bits, soit 111.

Ainsi, seulement K=4 valeurs de modes de prédiction parmi N=35 sont codées selon la troisième méthode de codage MC₃. Un code particulièrement ciblé est donc employé dans ce cas, ce qui permet de réduire substantiellement le débit. Lorsque la condition inverse est remplie, c'est-à-dire que le mode de prédiction A du bloc BR₁ et le mode de prédiction B du bloc BR₂ sont tous deux différents de 1, alors un arbre conforme à la figure 5 est employé.

### Description détaillée de la partie décodage

Un mode de réalisation de l'invention va maintenant être décrit, dans lequel le procédé de décodage selon l'invention est utilisé pour décoder un signal ou flux de données représentatif d'un paramètre d'image qui est apte à être décodé par un décodeur conforme à l'une quelconque des normes de décodage vidéo actuelles ou à venir.

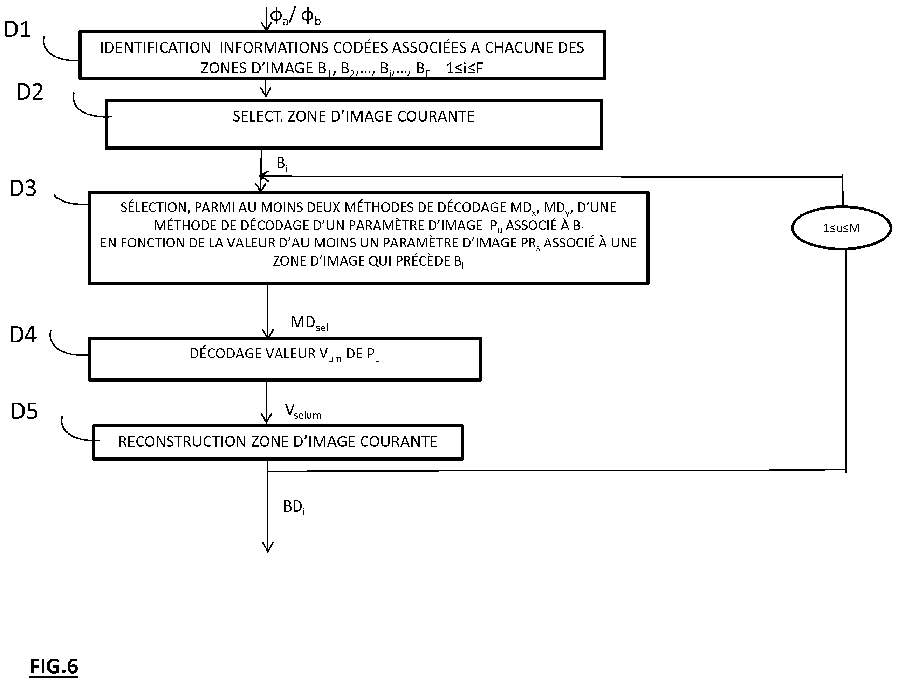

Dans ce mode de réalisation, le procédé de décodage selon l'invention est par exemple implémenté de manière logicielle ou matérielle par modifications d'un décodeur initialement conforme à l'une desdites norme. Le procédé de décodage selon l'invention est représenté sous la forme d'un algorithme comportant des étapes D1 à D5 telles que représentées à la figure 6.

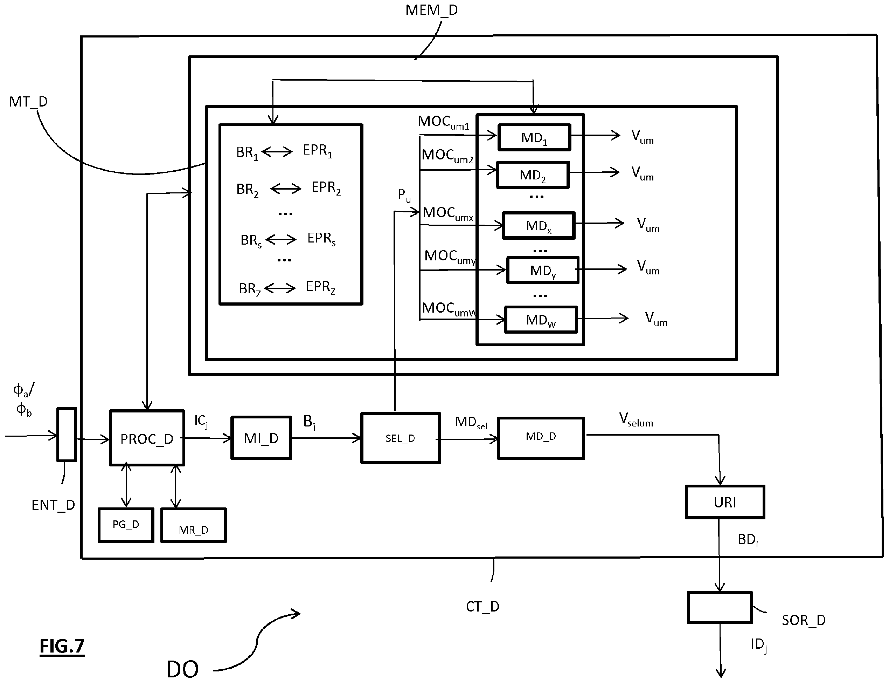

Selon le mode de réalisation de l'invention, le procédé de décodage selon l'invention est implémenté dans un dispositif de décodage DO représenté à la figure 7.

Comme illustré en figure 7, un tel dispositif décodeur comprend :
- une entrée ENT_D pour recevoir le signal de données ou flux courant Φₐ (fig.2A) ou Φ_{b} (fig.2B) à décoder,
- un circuit de traitement CT_D pour mettre en œuvre le procédé de décodage selon l'invention, le circuit de traitement CT_D contenant :
   - une mémoire MEM_D comprenant une mémoire tampon MT_D,
   - un processeur PROC_D piloté par un programme d'ordinateur PG_D,
- une sortie SOR_D pour délivrer une image courante reconstruite contenant les paramètres d'image décodés à l'issue du décodage selon le procédé de l'invention.

A l'initialisation, les instructions de code du programme d'ordinateur PG_D sont par exemple chargées dans une mémoire RAM, MR_D, avant d'être exécutées par le circuit de traitement CT_D.

Le procédé de décodage représenté sur la figure 6 s'applique à tout paramètre associé à une image courante ICⱼ à décoder qui peut être une image fixe ou bien faisant partie d'une séquence d'images IC₁, IC₂, ..., ICⱼ,..., IC_{G}, (1≤j≤G), certaines de ces images étant décodées en relation avec d'autres.

A cet effet, des informations représentatives de l'image courante ICⱼ à décoder sont identifiées dans le signal de données Φₐ ou Φ_{b} reçu à l'entrée ENT_D du décodeur DO et tel que délivré à l'issue du procédé de codage de la figure 2A ou 2B.

En référence à la figure 6, au cours d'une étape D1, il est procédé, de façon connue en soi, à la détermination dans le signal Φₐ ou Φ_{b} des informations associées à chacune des zones d'image B₁, B₂, ..., Bᵢ,..., B_{F} codées précédemment conformément à l'ordre lexicographique précité.

Une telle étape de détermination D1 est mise en œuvre par un dispositif MI_D d'analyse de flux, tel que représenté à la figure 7, lequel dispositif est piloté par le processeur PROC_D.

D'autres types de parcours que celui mentionné ci-dessus sont bien sûr possibles et dépendent de l'ordre de parcours choisi au codage.

Selon un exemple de réalisation, lesdites zones d'image à décoder sont des blocs rectangulaires ou carrés.

Selon un autre exemple de réalisation, les zones de l'image à décoder sont adaptées aux caractéristiques locales de l'image, telles que par exemple une texture homogène, un mouvement constant, un objet en avant plan dans l'image, etc...

Au cours d'une étape D2 représentée à la figure 6, le décodeur DO sélectionne comme zone d'image courante, une première zone à décoder Bᵢ de l'image ICⱼ, telle que par exemple la première zone B₁.

Dans l'exemple représenté sur la figure 4A ou 4B, la zone d'image courante Bᵢ est un bloc de taille 8x8 pixels.

De façon classique, la zone d'image courante Bᵢ est associée à une pluralité de paramètres d'image P₁, P₂,..., Pᵤ,..., P_{M}, tel que 1≤u≤M.

De tels paramètres sont par exemple :
- les coefficients résiduels de prédiction des pixels de la zone d'image courante si cette dernière est prédite conformément à un mode de prédiction donné,
- les valeurs de pixels constituant la zone d'image courante considérées tel qu'elles ou au travers d'une opération de calcul de caractéristique, telle que par exemple la moyenne ou l'énergie de ces pixels ou bien encore l'énergie de ces pixels après filtrage,
- le mode de prédiction (prédiction Intra, prédiction Inter, prédiction par défaut réalisant une prédiction pour laquelle aucune information n'est transmise au décodeur (« en anglais « skip »)),
- des informations précisant le type de prédiction (orientation, image de référence, ...),
- le type de découpage de la zone d'image courante,
- les informations de mouvement si nécessaire,
- le type de transformée appliquée aux données de la zone d'image courante, tel que les transformées en cosinus discrète DCT (abréviation anglaise de « Discrete Cosine Transform »), ou bien les transformées en sinus discrète DST (abréviation anglaise de « Discrete Sine Transform »),
- le pas de quantification,
- etc.

Un paramètre Pᵤ considéré prend une pluralité de valeurs Vᵤ₁, Vᵤ₂,..., Vᵤₘ,..., V_{uN} (1≤m≤N). Il s'agit par exemple :
- du mode de prédiction intra de la norme HEVC qui est associé à trente-cinq directions de prédiction différentes,
- du pas de quantification qui est associé à cinquante-deux valeurs possibles,
- de la taille du bloc et son partitionnement,
- du type de transformation appliquée sur les coefficients résiduels de prédiction des pixels de la zone d'image courante si cette dernière est prédite conformément à un mode de prédiction donné, par exemple une DCT ou DST d'un type donné ou une transformée définie par ses coefficients,
- etc...

Conformément à l'invention, au cours d'une étape D3 représentée à la figure 6, pour un paramètre d'image courant Pᵤ associé à la zone d'image courante Bᵢ, il est procédé à une sélection d'une méthode de décodage du paramètre Pᵤ, parmi au moins deux méthodes de décodage prédéterminées MDₓ et MD_{y}.

L'étape D3 est mise en œuvre par un dispositif de sélection SEL_D représenté sur la figure 7, lequel dispositif est piloté par le processeur PROC_D.

Selon un exemple de réalisation, seulement deux méthodes de décodage MDₓ et MD_{y} sont mises à disposition au décodeur DO.

De façon plus générale et de façon correspondante au codeur CO de la figure 3, comme représenté sur la figure 7, les méthodes de décodage MDₓ et MD_{y} appartiennent à un ensemble de W méthodes de décodage MD₁, MD₂,..., MDₓ,..., MD_{y},..., MD_{W} (1≤x≤y≤W) qui est stocké dans la mémoire tampon MT_D du décodeur DO. Pour une valeur Vᵤₘ donnée d'un paramètre d'image Pᵤ de la zone d'image courante Bᵢ, les W méthodes de décodage sont adaptées pour reconstruire la valeur Vᵤₘ à partir de W mots de codes MOCᵤₘ₁, MOCᵤₘ₂,..., MOCᵤₘₓ, ..., MOC_{umy},..., MOC_{umW} correspondant respectivement aux W méthodes de décodage mises à disposition au décodeur DO.

Conformément à l'invention, la sélection d'une méthode de décodage parmi au moins deux méthodes de décodage est fonction de la valeur d'au moins un paramètre d'image associé à une zone d'image de référence qui précède la zone d'image courante Bᵢ.

Selon un mode de réalisation, la zone d'image de référence est composée d'une pluralité de zones de référence BR₁, BR₂,..., BRₛ,..., BR_{Z} (1≤s≤Z) qui ont été décodées avant la zone d'image courante Bᵢ. En référence à la figure 7, de telles zones de référence BR₁, BR₂,..., BRₛ,..., BR_{Z} sont stockées dans la mémoire tampon MT_D du décodeur DO respectivement en association avec leurs ensembles de paramètres d'image correspondants EPR₁, EPR₂,..., EPRₛ,..., EPR_{Z}.

Par exemple, l'ensemble EPRₛ de paramètres d'image associé à la zone de référence BRₛ contient une pluralité de paramètres d'image PR₁, PR₂,..., PRₖ,..., Pᵥ (1≤k≤V) du type mentionné plus haut en relation avec la zone d'image courante Bᵢ.

De la même façon qu'au codeur CO de la figure 3, le paramètre de la zone de référence est par exemple du même type que le paramètre Pᵤ de la zone d'image courante Bᵢ ou bien encore d'un type différent. Des exemples de ces paramètres ont déjà été donnés plus haut, en liaison avec la description du procédé de codage des figures 2A à 2C.

En outre, toujours de façon correspondante au codage décrit plus haut, la sélection de la méthode de décodage peut être mise en œuvre en fonction de plusieurs paramètres associés à une zone d'image de référence.

En référence à nouveau à la figure 6, il est procédé, au cours d'une étape D4, au décodage de la valeur Vᵤₘ du paramètre d'image Pᵤ à l'aide de la méthode de décodage sélectionnée.

L'étape D4 est mise en œuvre par un dispositif de décodage MD_D représenté sur la figure 7, lequel dispositif est piloté par le processeur PROC_D.

A cet effet, le mot de code MOCₛₑₗᵤₘ associé à la valeur Vᵤₘ à l'issue de l'étape de codage C4a de la figure 2A ou bien C4b de la figure 2B est décodé à l'aide de la méthode de décodage MDₛₑₗ sélectionnée parmi les méthodes de décodage MD₁ à MD_{W}. S'il s'agit par exemple de la méthode de décodage MDₓ, le mot de code MOCₓᵤₘ identifié dans le flux Φₐ ou Φ_{b} est décodé à l'aide de la méthode de décodage MDₓ conformément à l'association stockée dans la mémoire tampon MT_D du décodeur DO de la figure 7, afin de reconstruire la valeur Vᵤₘ du paramètre d'image courant Pᵤ. Le mot de code MOCₓᵤₘ contient des informations numériques, tels que des bits par exemple.

Les étapes de décodage D3 et D4 qui viennent d'être décrites ci-dessus sont ensuite mises en œuvre pour chacun des paramètres P₁, P₂,..., Pᵤ,..., P_{M} à reconstruire de la zone d'image courante Bᵢ.

Au cours d'une étape D5 représentée à la figure 6, il est procédé à la reconstruction du bloc courant Bᵢ et à l'écriture de ce dernier dans une image décodée IDⱼ.

Une telle étape est mise en œuvre par un dispositif URI de reconstruction d'image tel que représenté sur la figure 7, ledit dispositif étant piloté par le processeur PROC_D.

L'ensemble des étapes D1 à D5 de la figure 6 est ensuite mis en œuvre pour chacune des zones d'image B₁, B₂, ..., Bᵢ, .... B_{F} à décoder de l'image courante ICⱼ considérée, dans un ordre prédéterminé qui est par exemple l'ordre lexicographique.

Selon un exemple de réalisation, la réduction des ressources en calcul du décodeur DO de la figure 7 peut être augmentée en mettant en œuvre, dans le dispositif MD_D de décodage de paramètre d'image, un décodage CABAC sur le mot de code MOCₛₑₗᵤₘ inscrit dans le flux Φₐ ou bien sur au moins un ou plusieurs des mots de code MOCₛₑₗᵤ₁, MOCₛₑₗᵤ₂,..., MOCₛₑₗᵤₘ, ..., MOC_{seluN} inscrits dans le flux Φₐ si le paramètre d'image courant Pᵤ prend N valeurs.

Un tel mode de réalisation permet d'optimiser la réduction de la complexité des calculs du décodeur DO.

## Revendications

1. Procédé de codage d'au moins un paramètre d'image courant (Pᵤ), N valeurs possibles étant associées audit au moins un paramètre d'image courant, tel que N≥2, **caractérisé en ce que**, relativement à une zone (Bᵢ) d'une image courante (ICⱼ), il met en œuvre ce qui suit :
- en fonction de la valeur d'au moins un paramètre d'une zone d'image qui précède ladite zone de l'image courante, sélection (C3a ; C3b) d'une méthode de codage (MCₛₑₗ) dudit au moins un paramètre d'image courant, parmi au moins une première et une deuxième méthodes de codage prédéterminées (MCₓ, MC_{y}), ladite première méthode de codage associant les N valeurs dudit au moins un paramètre à respectivement N mots de code et ladite deuxième méthode de codage associant seulement K valeurs parmi N dudit au moins un paramètre, tel que K<N, à respectivement K mots de code, lesdites K valeurs étant les K premières valeurs les plus probables dudit au moins un paramètre,
- et **en ce que** lorsque ladite deuxième méthode de codage est sélectionnée, inscrire dans un signal de données celui des K mots de code qui a été associé à celle (Vᵤₘ) des K premières valeurs les plus probables prise par ledit au moins un paramètre.

2. Procédé de codage selon la revendication 1, dans lequel N valeurs possibles étant associées audit au moins un paramètre d'image courant, tel que N≥2 :
- Q mots de code ayant tous la même longueur sont associés respectivement à certaines Q valeurs possibles parmi N dudit au moins un paramètre d'image courant, tel que Q<N,
- N-Q ou K-Q mots de code, de longueur respective inférieure à celle des Q mots de code, sont associés respectivement aux N-Q ou K-Q valeurs restantes possibles dudit au moins un paramètre d'image courant.

3. Dispositif (CO) de codage d'au moins un paramètre d'image courant, N valeurs possibles étant associées audit au moins un paramètre d'image courant, tel que N≥2, ledit dispositif comprenant un circuit de traitement (CT_C) **caractérisé en ce qu'**il est agencé pour, relativement à une zone d'une image courante :
- en fonction de la valeur d'au moins un paramètre d'une zone d'image qui précède ladite zone de l'image courante, sélectionner une méthode de codage dudit au moins un paramètre d'image courant, parmi au moins une première et une deuxième méthodes de codage prédéterminées, ladite première méthode de codage associant les N valeurs dudit au moins un paramètre à respectivement N mots de code et ladite deuxième méthode de codage associant seulement K valeurs parmi N dudit au moins un paramètre, tel que K<N, à respectivement K mots de code, lesdites K valeurs étant les K valeurs les plus probables dudit au moins un paramètre,
- et **en ce que** lorsque ladite deuxième méthode de codage est sélectionnée, inscrire dans un signal de données celui des K mots de code qui a été associé à celle (Vᵤₘ) des K premières valeurs les plus probables prise par ledit au moins un paramètre.

4. Programme d'ordinateur comportant des instructions de code de programme pour l'exécution des étapes du procédé de codage selon la revendication 1 ou la revendication 2, lorsque ledit programme est exécuté sur un ordinateur.

5. Support d'enregistrement lisible par un ordinateur sur lequel est enregistré un programme d'ordinateur comprenant des instructions de code de programme pour l'exécution des étapes du procédé de codage selon la revendication 1 ou la revendication 2, lorsque ledit programme est exécuté par un ordinateur.

6. Procédé de décodage d'au moins un paramètre d'image courant (Pᵤ), N valeurs possibles étant associées audit au moins un paramètre d'image courant, tel que N≥2, **caractérisé en ce que**, relativement à une zone (Bᵢ) d'une image courante (ICⱼ), il met en œuvre ce qui suit :
- en fonction de la valeur d'au moins un paramètre d'une zone d'image qui précède ladite zone de l'image courante, sélection (D3) d'une méthode de décodage (MDₛₑₗ) dudit au moins un paramètre d'image courant, parmi au moins une première et une deuxième méthodes de décodage prédéterminées (MDₓ, MD_{y}), ladite première méthode de décodage associant les N valeurs dudit au moins un paramètre à respectivement N mots de code et ladite deuxième méthode de décodage associant seulement K valeurs parmi N dudit au moins un paramètre, tel que K<N, à respectivement K mots de code, lesdites K valeurs étant les K premières valeurs les plus probables dudit au moins un paramètre,
- et **en ce que** lorsque ladite deuxième méthode de décodage est sélectionnée pour décoder l'une (Vᵤₘ) des K premières valeurs les plus probables prise par ledit au moins un paramètre :
- identifier (D4), dans un signal de données, un des K mots de code,
- reconstruire (D4) la valeur (Vᵤₘ) dudit au moins un paramètre, ladite valeur correspondant à la valeur qui a été associée audit mot de code identifié.

7. Procédé de décodage selon la revendication 6, dans lequel N valeurs possibles étant associées audit au moins un paramètre d'image courant, tel que N≥2 :
- Q mots de code ayant tous la même longueur sont associés respectivement à certaines Q valeurs possibles parmi N dudit au moins un paramètre d'image courant, tel que Q<N,
- N-Q ou K-Q mots de code, de longueur respective inférieure à celle des Q mots de code, sont associés respectivement aux N-Q ou K-Q valeurs restantes possibles dudit au moins un paramètre d'image courant.

8. Dispositif de décodage d'au moins un paramètre d'image courant (Pᵤ), N valeurs possibles étant associées audit au moins un paramètre d'image courant, tel que N≥2, ledit dispositif comprenant un circuit de traitement (CT_D) **caractérisé en ce qu'**il est agencé pour, relativement à une zone d'une image courante :
- en fonction de la valeur d'au moins un paramètre d'une zone d'image qui précède ladite zone de l'image courante, sélectionner une méthode de décodage dudit au moins un paramètre d'image courant, parmi au moins une première et une deuxième méthodes de décodage prédéterminées, ladite première méthode de décodage associant les N valeurs dudit au moins un paramètre à respectivement N mots de code et ladite deuxième méthode de décodage associant seulement respectivement K valeurs parmi N dudit au moins un paramètre, tel que K<N, à respectivement K mots de code, lesdites K valeurs étant les K premières valeurs les plus probables dudit au moins un paramètre,
- et **en ce que** lorsque ladite deuxième méthode de décodage est sélectionnée pour décoder l'une (Vᵤₘ) des K premières valeurs les plus probables prise par ledit au moins un paramètre :
- identifier, dans un signal de données, un des K mots de code,
- reconstruire la valeur (Vᵤₘ) dudit au moins un paramètre, ladite valeur correspondant à la valeur qui a été associée audit mot de code identifié.

9. Programme d'ordinateur comportant des instructions de code de programme pour l'exécution des étapes du procédé de décodage selon la revendication 6 ou la revendication 7, lorsque ledit programme est exécuté sur un ordinateur.

10. Support d'enregistrement lisible par un ordinateur sur lequel est enregistré un programme d'ordinateur comprenant des instructions de code de programme pour l'exécution des étapes du procédé de décodage selon la revendication 6 ou la revendication 7, lorsque ledit programme est exécuté par un ordinateur.

## Patentansprüche

1. Verfahren zur Codierung mindestens eines aktuellen Bildparameters (Pᵤ), wobei dem mindestens einen aktuellen Bildparameter N mögliche Werte zugeordnet werden, so dassN ≥ 2, **dadurch gekennzeichnet, dass** es bezüglich eines Bereichs (Bᵢ) eines aktuellen Bildes (ICⱼ) Folgendes implementiert:
- in Abhängigkeit von dem Wert mindestens eines Parameters eines Bildbereichs, der dem aktuellen Bildbereich vorausgeht, Auswählen (C3a; C3b) einer Codierungsmethode (MCₛₑₗ) zur Codierung des mindestens einen aktuellen Bildparameters aus mindestens einer ersten und einer zweiten vorbestimmten Codierungsmethode (MCₓ, MC_{y}), wobei die erste Codierungsmethode die N Werte des mindestens einen Parameters jeweils N Codewörtern zuordnet und wobei die zweite Codierungsmethode nur K von N Werten des mindestens einen Parameters, so dass K < N, jeweils K Codewörtern zuordnet, wobei die K Werte die K ersten wahrscheinlichsten Werte des mindestens einen Parameters sind,
- und dass, wenn die zweite Codierungsmethode ausgewählt wird, in ein Datensignal dasjenige der K Codewörter eingefügt wird, das demjenigen (Vᵤₘ) der K ersten wahrscheinlichsten Werte zugeordnet worden ist, der von dem mindestens einen Parameter angenommen wurde.

2. Verfahren zur Codierung nach Anspruch 1, wobei N mögliche Werte dem mindestens einen aktuellen Bildparameter zugeordnet werden, so dass N ≥ 2:
- wobei Q Codewörter, die alle die gleiche Länge aufweisen, jeweils bestimmten Q möglichen aus N Werten des mindestens einen aktuellen Bildparameters zugeordnet sind, so dass Q < N,
- N-Q oder K-Q Codewörter mit jeweils einer geringeren Länge als derjenigen der Q Codewörter jeweils den N-Q oder K-Q möglichen restlichen Werten des mindestens einen aktuellen Bildparameters zugeordnet werden.

3. Vorrichtung (CO) zur Codierung mindestens eines aktuellen Bildparameters, wobei N mögliche Werte dem mindestens einen aktuellen Bildparameter zugeordnet werden, so dass N ≥ 2, wobei die Vorrichtung eine Verarbeitungsschaltung (CT_C) umfasst, die **dadurch gekennzeichnet ist, dass** sie dazu ausgebildet ist, bezüglich eines Bereichs eines aktuellen Bildes:
- in Abhängigkeit von dem Wert mindestens eines Parameters eines Bildbereichs, der dem aktuellen Bildbereich vorausgeht, eine Codierungsmethode zur Codierung des mindestens einen aktuellen Bildparameters aus mindestens einer ersten und einer zweiten vorbestimmten Codierungsmethode auszuwählen, wobei die erste Codierungsmethode die N Werte des mindestens einen Parameters jeweils N Codewörtern zuordnet und wobei die zweite Codierungsmethode nur K von N Werten des mindestens einen Parameters, so dass K < N, jeweils K Codewörtern zuordnet, wobei die K Werte die K wahrscheinlichsten Werte des mindestens einen Parameters sind,
- und dass, wenn die zweite Codierungsmethode ausgewählt wird, in ein Datensignal dasjenige der K Codewörter eingefügt wird, das demjenigen (Vᵤₘ) der K ersten wahrscheinlichsten Werte zugeordnet worden ist, der von dem mindestens einen Parameter angenommen wurde.

4. Computerprogramm, das Programmcodeanweisungen umfasst, die bei der Ausführung des Programms auf einem Computer die Schritte des Verfahrens zur Codierung nach Anspruch 1 oder Anspruch 2 ausführen.

5. Computerlesbares Speichermedium, auf dem ein Computerprogramm gespeichert ist, das Programmcodeanweisungen umfasst, die bei der Ausführung des Programms durch einen Computer die Schritte des Verfahrens zur Codierung nach Anspruch 1 oder Anspruch 2 ausführen.

6. Verfahren zur Decodierung mindestens eines aktuellen Bildparameters (Pᵤ), wobei dem mindestens einen aktuellen Bildparameter N mögliche Werte zugeordnet werden, so dass N ≥ 2, **dadurch gekennzeichnet, dass** es bezüglich eines Bereichs (Bᵢ) eines aktuellen Bildes (ICⱼ) Folgendes implementiert:
- in Abhängigkeit von dem Wert mindestens eines Parameters eines Bildbereichs, der dem aktuellen Bildbereich vorausgeht, Auswählen (D3) einer Codierungsmethode (MDₛₑₗ) zur Decodierung des mindestens einen aktuellen Bildparameters aus mindestens einer ersten und einer zweiten vorbestimmten Decodierungsmethode (MDₓ, MD_{y}), wobei die erste Decodierungsmethode die N Werte des mindestens einen Parameters jeweils N Codewörtern zuordnet und wobei die zweite Decodierungsmethode nur K von N Werten des mindestens einen Parameters, so dass K < N, jeweils K Codewörtern zuordnet, wobei die K Werte die K ersten wahrscheinlichsten Werte des mindestens einen Parameters sind,
- und dass, wenn das zweite Decodierungsverfahren zum Decodieren eines (Vᵤₘ) der K ersten wahrscheinlichsten Werte, die von dem mindestens einen Parameter angenommen werden, ausgewählt wird:
- in einem Datensignal eines der K Codewörter identifiziert wird (D4),
- der Wert (Vᵤₘ) des mindestens einen Parameters rekonstruiert wird (D4), wobei der Wert dem Wert entspricht, der dem identifizierten Codewort zugeordnet worden ist.

7. Verfahren zur Decodierung nach Anspruch 6, wobei N mögliche Werte dem mindestens einen aktuellen Bildparameter zugeordnet werden, mit N ≥ 2:
- wobei Q Codewörter, die alle die gleiche Länge aufweisen, jeweils bestimmten Q möglichen aus N Werten des mindestens einen aktuellen Bildparameters zugeordnet sind, so dass Q < N,
- N-Q oder K-Q Codewörter mit jeweils einer geringeren Länge als derjenigen der Q Codewörter jeweils den N-Q oder K-Q möglichen restlichen Werten des mindestens einen aktuellen Bildparameters zugeordnet werden.

8. Vorrichtung zur Decodierung mindestens eines aktuellen Bildparameters (Pᵤ), wobei N mögliche Werte dem mindestens einen aktuellen Bildparameter zugeordnet werden, so dass N ≥ 2, wobei die Vorrichtung eine Verarbeitungsschaltung (CT_D) umfasst, die **dadurch gekennzeichnet ist, dass** sie dazu ausgebildet ist, bezüglich eines Bereichs eines aktuellen Bildes:
- in Abhängigkeit von dem Wert mindestens eines Parameters eines Bildbereichs, der dem aktuellen Bildbereich vorausgeht, eine Decodierungsmethode zur Decodierung des mindestens einen aktuellen Bildparameters aus mindestens einer ersten und einer zweiten vorbestimmten Decodierungsmethode auszuwählen, wobei die erste Decodierungsmethode die N Werte des mindestens einen Parameters jeweils N Codewörtern zuordnet und wobei die zweite Decodierungsmethode nur K von N Werten des mindestens einen Parameters, so dass K < N, jeweils K Codewörtern zuordnet, wobei die K Werte die K wahrscheinlichsten Werte des mindestens einen Parameters sind,
- und dass, wenn das zweite Decodierungsverfahren zum Decodieren eines (Vᵤₘ) der K ersten wahrscheinlichsten Werte, die von dem mindestens einen Parameter angenommen werden, ausgewählt wird:
- in einem Datensignal eines der K Codewörter identifiziert wird,
- der Wert (Vᵤₘ) des mindestens einen Parameters rekonstruiert wird, wobei der Wert dem Wert entspricht, der dem identifizierten Codewort zugeordnet worden ist.

9. Computerprogramm, das Programmcodeanweisungen umfasst, die bei der Ausführung des Programms auf einem Computer die Schritte des Verfahrens zur Decodierung nach Anspruch 6 oder Anspruch 7 ausführen.

10. Computerlesbares Speichermedium, auf dem ein Computerprogramm gespeichert ist, das Programmcodeanweisungen umfasst, die bei der Ausführung des Programms durch einen Computer die Schritte des Verfahrens zur Decodierung nach Anspruch 6 oder Anspruch 7 ausführen.

## Claims

1. Method for coding at least one current image parameter (Pᵤ), N possible values being associated with said at least one current image parameter, such that N≥2, **characterized in that**, relative to a zone (Bᵢ) of a current image (ICj), it implements the following:
- as a function of the value of at least one parameter of an image zone which precedes said zone of the current image, selecting (C3a; C3b) a method for coding (MCₛₑₗ) said at least one current image parameter, out of at least a first and a second predetermined coding methods (MCₓ, MC_{y}), said first coding method associating the N values of said at least one parameter with N respective code words and said second coding method associating only K values out of N of said at least one parameter, such that K<N, with K respective code words, said K values being the first K most probable values of said at least one parameter,
- and **in that**, when said second coding method is selected, write in a data signal that of the K code words that was associated with that (Vᵤₘ) of the first K most probable values taken by said at least one parameter.

2. Coding method according to Claim 1, wherein, N possible values being associated with said at least one current image parameter, such that N≥2:
- Q code words all having the same length are respectively associated with certain Q possible values out of N of said at least one current image parameter, such that Q<N,
- N-Q or K-Q code words, of respective length less than that of the Q code words, are respectively associated with the N-Q or K-Q possible remaining values of said at least one current image parameter.

3. Device (CO) for coding at least one current image parameter, N possible values being associated with said at least one current image parameter, such that N≥2, said device comprising a processing circuit (CT_C), **characterized in that** it is arranged to, relative to a zone of a current image:
- as a function of the value of at least one parameter of an image zone which precedes said zone of the current image, select a method for coding said at least one current image parameter, out of at least a first and a second predetermined coding methods, said first coding method associating the N values of said at least one parameter with N respective code words and said second coding method associating only K values out of N of said at least one parameter, such that K<N, with K respective code words, said K values being the K most probable values of said at least one parameter,
- and **in that**, when said second coding method is selected, write in a data signal that of the K code words that was associated with that (Vᵤₘ) of the first K most probable values taken by said at least one parameter.

4. Computer program comprising program code instructions for executing the steps of the coding method according to Claim 1 or Claim 2, when said program is run on a computer.

5. Computer-readable storage medium on which is stored a computer program comprising program code instructions for executing the steps of the coding method according to Claim 1 or Claim 2, when said program is run by a computer.

6. Method for decoding at least one current image parameter (Pᵤ), N possible values being associated with said at least one current image parameter, such that N≥2, **characterized in that**, relative to a zone (Bᵢ) of a current image (ICj), it implements the following:
- as a function of the value of at least one parameter of an image zone which precedes said zone of the current image, selecting (D3) a method for decoding (MDₛₑₗ) said at least one current image parameter, out of at least a first and a second predetermined decoding methods (MDₓ, MD_{y}), said first decoding method associating the N values of said at least one parameter with N respective code words and said second decoding method associating only K values out of N of said at least one parameter, such that K<N, with K respective code words, said K values being the first K most probable values of said at least one parameter,
- and **in that**, when said second decoding method is selected to decode one (Vᵤₘ) of the K first most probable values taken by said at least one parameter:
- identify (D4), in a data signal, one of the K code words,
- reconstruct (D4) the value (Vᵤₘ) of said at least one parameter, said value corresponding to the value that was associated with said identified code word.

7. Decoding method according to Claim 6, wherein, N possible values being associated with said at least one current image parameter, such that N≥2:
- Q code words all having the same length are respectively associated with certain Q possible values out of N of said at least one current image parameter, such that Q<N,
- N-Q or K-Q code words, of respective length less than that of the Q code words, are respectively associated with the N-Q or K-Q possible remaining values of said at least one current image parameter.

8. Device for decoding at least one current image parameter (Pᵤ), N possible values being associated with said at least one current image parameter, such that N≥2, said device comprising a processing circuit (CT_D), **characterized in that** it is arranged to, relative to a zone of a current image:
- as a function of the value of at least one parameter of an image zone which precedes said zone of the current image, select a method for decoding said at least one current image parameter, out of at least a first and a second predetermined decoding methods, said first decoding method associating the N values of said at least one parameter with N respective code words and said second decoding method associating only K respective values out of N of said at least one parameter, such that K<N, with K respective code words, said K values being the first K most probable values of said at least one parameter,
- and **in that**, when said second decoding method is selected to decode one (Vᵤₘ) of the K first most probable values taken by said at least one parameter:
- identify, in a data signal, one of the K code words,
- reconstruct the value (Vᵤₘ) of said at least one parameter, said value corresponding to the value that was associated with said identified code word.

9. Computer program comprising program code instructions for executing the steps of the decoding method according to Claim 6 or Claim 7, when said program is run on a computer.

10. Computer-readable storage medium on which is stored a computer program comprising program code instructions for executing the steps of the decoding method according to Claim 6 or Claim 7, when said program is run by a computer.
